# EUROPEAN PATENT SPECIFICATION

(11) **EP 3 250 640 B1**
(45) Date of publication and mention of the grant of the patent: **13.03.2019**
(21) Application number: 16708773.3
(22) Date of filing: 28.01.2016
(51) Int. Cl.: B65D 81/26, C08K 3/24, C08K 5/00, C08K 5/09, C08L 67/02, C08L 71/02

(54) **DURABLE OXYGEN SCAVENGING PLASTIC CONTAINERS**
HALTBARE SAUERSTOFFABSORBIERENDE KUNSTSTOFFBEHÄLTER
RÉCIPIENT EN MATIÈRE PLASTIQUE DURABLE ET DESOXYGENANT

(30) Priority: 30.01.2015 US 201562110004 P
(43) Date of publication of application: 06.12.2017
(73) Proprietor: Graham Packaging Company, L.P., Lancaster, PA 17601 (US)
(72) Inventor: AKKAPEDDI, Murali K., York, PA 17408 (US); LYNCH, Brian A., Merrimack, NH 03054 (US)
(74) Representative: De Anna, Pier Luigi
(86) International application number: PCT/US2016/015346
(87) International publication number: WO 2016/123330

(56) References cited:
- US-A1- 2002 183 448
- US-A1- 2012 283 366
- US-B1- 6 455 620
- Brody, Aaron L.; Strupinsky, Gene R.; Pruskin, Lauri R.: "The use of oxygen scavengers and active packaging to reduce oxygen within internal package enviroments", 1 September 1995 (1995-09-01), U. S. Army Soldier Systems Command (Prov), Natick, Massachusetts, XP002756627, pages Frontpg.-124, page 63 - page 67

## Description

### BACKGROUND OF THE INVENTION

The present invention relates to plastic containers comprising polymers and compounds capable of reacting with oxygen egressing and ingressing through walls of the plastic container. More specifically, the plastic containers of the present invention are made from compositions that impart toughness and durability as measured by intrinsic viscosity (IV).

It is known in the art to include an oxygen scavenger in the packaging structure for the protection of oxygen sensitive materials. Such scavengers are believed to react with oxygen that is trapped in the package or that permeates from outside of the package, thus extending the life of package contents. These packages include films, bottles and containers. Food, beverages (such as beer and fruit juices), cosmetics and medicines are particularly sensitive to oxygen exposure and require high barrier properties to oxygen to preserve the freshness of the package contents and avoid changes in flavor, texture and color.

Oxygen scavengers which have been disclosed to be useful include polymers capable of undergoing metal catalyzed oxidation such as m-xylylene diamine adipate or polybutadiene, oxidizable metals such as iron, or reduced anthraquinones. Oxygen absorbers that have been blended into polyethylene terephthalate (PET) include m-xylylene diamine adipate with a cobalt catalyst as well as modified polybutadienes incorporated through a reactive extruder. These materials, however, when blended into PET are hazy.

U.S. Patent No. 6,455,620 to Cyr et al. ("Cyr") discloses blends of PET and an oxygen scavenging composition comprising a poly(alkylene glycol)s and a transition metal catalyst. Although effective at scavenging oxygen, containers made according to Cyr suffer from significant drawbacks. For example, IV loss is exhibited in the PET due to MW degradation which leads to problems with both melt extruding the preforms and blow molding the containers. It is believed that the -OH end groups of the poly(alkylene glycol) such as, for example, poly(tetramethylene ether) glycol, react with PET causing chain cleavage and IV loss. Also, the containers having lower PET IV are not durable and tough for some applications or to be suitably resistant to impact when dropped. US 2002/0183448 A1 discoses a monolayer package for oxygen sensitive products comprised of an oxygen scavenging composition, the monolayer package being appropriate for direct contact with the oxygen sensitive products, wherein the oxygen scavenging composition is comprised of a modified copolymer and a transition metal catalyst. The modified copolymer contains oxygen scavenging moiety segments, for example in the form of polypropylene oxide oligomers, in an amount of 0.05-20 wt.-%.

Thus, there is a need in the art for effective oxygen scavenging compositions comprising blends of PET and poly(alkylene glycol) that are suitable to process in the melt phase without loss of IV and, when blow molded into a container, result in acceptable physical performance and oxygen scavenging properties

### BRIEF SUMMARY OF THE INVENTION

In one aspect, the present invention satisfies this need by providing a wall for a package comprising at least one layer, the layer comprising a composition, the composition comprising: a polyester base polymer; at least one polyether polyol at a concentration of from 0.3 to 0.7 wt. %; at least one chain extending agent; and at least one transition metal in a positive oxidation state.

### BRIEF DESCRIPTION OF THE DRAWINGS

FIG. 1 is a graph illustrating oxygen ingress data from the samples of Example 1 (Reference);
FIG. 2 is a graph illustrating oxygen ingress data from the samples of Example 2 (Reference);
FIG. 3 is a graph illustrating oxygen ingress data from the samples of Example 3 (Reference);
FIG 4. is a graph illustrating oxygen ingress data from the samples of Examples 4 and 5 (Reference);
FIG. 5 is a graph illustrating intrinsic viscosity data from the samples of Control Example 4 and Examples 6-8; and
FIG. 6 is a graph illustrating intrinsic viscosity data from the samples of Control Example 6 and Examples 9-11.

### DETAILED DESCRIPTION OF THE INVENTION

The present invention provides a wall for a package comprising at least one layer, the layer comprising a composition, the composition comprising: a polyester base polymer; at least one polyether polyol at a concentration of from 0.3 to 0.7 wt. %; at least one chain extending agent; and at least one transition metal in a positive oxidation state. Plastic packaging comprising compositions of the present invention actively scavenge oxygen from whatever is in contact with the package.

Polymers comprising the oxygen scavenging systems of the present invention can be used as layers in rigid containers, flexible film and in thermoformed, foamed, shaped or extruded articles and the like for packaging oxygen-sensitive products or use in oxygen sensitive environments. The articles containing the composition limit oxygen exposure by acting as an active oxygen barrier and/or a means for scavenging oxygen from within the article.

Suitable articles include, but are not limited to, film, sheet, tubing, profiles, pipes, fiber, container preforms, blow molded articles such as rigid containers, thermoformed articles and flexible bags and combinations thereof. Typical rigid or semi-rigid articles can be formed from plastic, paper or cardboard cartons or bottles such as juice containers, soft drink containers, beer containers, soup containers, milk containers, thermoformed trays or cups. In addition, the walls of such articles often comprise multiple layers of materials. This invention can be used in one, some, or all of those layers.

### Polyester Base Polymer

Compositions of the present invention comprise at least one base polymer comprising a polyester. As used herein, the term "base polymer" refers to a polymer component of a container of the present invention that provides the structure and mechanical properties of the container. The term "base polymer" is synonymous with the term "structural polymer," which is commonly used in the art.

In preferred embodiments, the polyester base polymers are thermoplastic and can include a composition in the melt phase polymerization, as an amorphous pellet, as a solid state polymer, as a semi-crystalline particle, as a composition of matter in a melt processing zone, as a bottle preform, or in the form of a stretch blow molded bottle or other articles. In certain preferred embodiments, the polyester is polyethylene terephthalate (PET).

Examples of suitable polyester base polymers include polyethylene terephthalate homopolymers and copolymers modified with one or more polycarboxylic acid modifiers in a cumulative amount of less than 15 mole %, or 10 mole % or less, or 8 mole % or less, or one or more hydroxyl compound modifiers in an amount of less than 60 mol %, or less than 50 mole %, or less than 40 mole %, or less than 15 mole %, or 10 mole % or less, or 8 mole % or less (collectively referred to for brevity as "PET") and polyethylene naphthalate homopolymers and copolymers modified with a cumulative amount of with less than 15 mole %, or 10 mole % or less, or 8 mole % or less, of one or more polycarboxylic acid modifiers or modified less than 60 mol %, or less than 50 mole %, or less than 40 mole %, or less than 15 mole %, or 10 mole % or less, or 8 mole % or less of one or more hydroxyl compound modifiers (collectively referred to herein as "PEN"), and blends of PET and PEN. A modifier polycarboxylic acid compound or hydroxyl compound is a compound other than the compound contained in an amount of at least 85 mole %. The preferred polyester polymer is polyalkylene terephthalate, and most preferred is PET.

Also suitable for use as the polyester base polymer of the present invention is polyethylene-furanoate (PEF), which is a bio-derived analogue of polyethylene-terephthalate (PET). PEF is commercially available from Avantium (Amsterdam, the Netherlands).

Suitable for use as the base polymer component of the present invention is any commercially available PET resin (homopolymers and copolymer grades) that are suitable for PET bottle manufacturing by a conventional injection stretch blow molding process. Preferably, the PET resins suitable for bottle production have an IV range from 0.72 to 0.84 dL/g.

In some embodiments, the polyester polymer contains at least 90 mole % ethylene terephthalate repeat units, and in other embodiments, at least 92 mole %, and in yet other embodiments, or at least 94 mole %, based on the moles of all repeat units in the polyester polymers.

In addition to a diacid component of terephthalic acid, derivates of terephthalic acid, naphthalene-2,6-dicarboxylic acid, derivatives of naphthalene-2,6-dicarboxylic acid, or mixtures thereof, the polycarboxylic acid component(s) of the present polyester may include one or more additional modifier polycarboxylic acids. Such additional modifier polycarboxylic acids include aromatic dicarboxylic acids preferably having 8 to 14 carbon atoms, aliphatic dicarboxylic acids preferably having 4 to 12 carbon atoms, or cycloaliphatic dicarboxylic acids preferably having 8 to 12 carbon atoms.

Examples of modifier dicarboxylic acids useful as an acid component(s) are phthalic acid, isophthalic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic acid, sebacic acid, and the like, with isophthalic acid, naphthalene-2,6-dicarboxylic acid, and cyclohexanedicarboxylic acid being most preferable. It should be understood that use of the corresponding acid anhydrides, esters, and acid chlorides of these acids is included in the term "polycarboxylic acid." It is also possible for trifunctional and higher order polycarboxylic acids to modify the polyester.

The hydroxyl component is made from compounds containing 2 or more hydroxyl groups capable of reacting with a carboxylic acid group. In some preferred embodiments, preferred hydroxyl compounds contain 2 or 3 hydroxyl groups. Certain preferred embodiments, have 2 hydroxyl groups. These hydroxyl compounds include C₂-C₄ alkane diols, such as ethylene glycol, propane diol, and butane diol, among which ethylene glycol is most preferred for container applications. In addition to these diols, other modifier hydroxyl compound component(s) may include diols such as cycloaliphatic diols preferably having 6 to 20 carbon atoms and/or aliphatic diols preferably having 3 to 20 carbon atoms. Examples of such diols include diethylene glycol; triethylene glycol; 1,4-cyclohexanedimethanol; propane-1,3-diol and butane-1,4-diol (which are considered modifier diols if ethylene glycol residues are present in the polymer in an amount of at least 85 mole % based on the moles of all hydroxyl compound residues); pentane-1,5-diol; hexane-1,6-diol; 3-methylpentanediol-(2,4); neopentyl glycol; 2-methylpentanediol-(1,4); 2,2,4-trimethylpentane-diol-(1,3); 2,5-ethylhexanediol-(1,3); 2,2-diethyl propane-diol-(1,3); hexanediol-(1,3); 1,4-di-(hydroxyethoxy)-benzene; 2,2-bis-(4-hydroxycyclohexyl)-propane; 2,4-dihydroxy-1,1,3,3-tetramethyl-cyclobutane; 2,2-bis-(3-hydroxyethoxyphenyl)-propane; and 2,2-bis-(4-hydroxypropoxyphenyl)-propane. Typically, polyesters such as polyethylene terephthalate are made by reacting a glycol with a dicarboxylic acid as the free acid or its dimethyl ester to produce an ester monomer and/or oligomers, which are then polycondensed to produce the polyester.

In some preferred embodiments, modifiers include isophthalic acid, naphthalenic dicarboxylic acid, trimellitic anhydride, pyromellitic dianhydride, 1,4-cyclohexane dimethanol, and diethylene glycol. The amount of the polyester polymer in the formulated polyester polymer composition ranges from greater than 50.0 wt. %, or from 80.0 wt. %, or from 90.0 wt. %, or from 95.0 wt. %, or from 96.0 wt. %, or from 97 wt. %, and up to 99.90 wt. %, based on the combined weight of all polyester polymers and all polyamide polymers. The formulated polyester polymer compositions may also include blends of formulated polyester polymer compositions with other thermoplastic polymers such as polycarbonate. In some preferred compositions, the polyester comprises a majority of the composition of the inventions, and in some embodiments the polyester is present in an amount of at least 80 wt. %, or at least 90 wt. %, based on the weight of the composition (excluding fillers, inorganic compounds or particles, fibers, impact modifiers, or other polymers serve as impact modifiers or which form a discontinuous phase such as may be found in cold storage food trays).

The polyester compositions can be prepared by polymerization procedures known in the art sufficient to effect esterification and polycondensation. Polyester melt phase manufacturing processes include direct condensation of a dicarboxylic acid with the diol, optionally in the presence of esterification catalysts, in the esterification zone, followed by polycondensation in the prepolymer and finishing zones in the presence of a polycondensation catalyst; or ester exchange usually in the presence of a transesterification catalyst in the ester exchange zone, followed by prepolymerization and finishing in the presence of a polycondensation catalyst, and each may optionally be solid stated according to known methods.

In some embodiments of the present invention, the polyester compositions of the base polymer comprises less than 40 ppm of phosphorous, preferably less than 30 ppm of phosphorous, more preferably less than 20 ppm of phosphorous, still more preferably less than 10 ppm of phosphorous, and most preferably the polyester base polymer is substantially free of phosphorous. A used herein, the term "substantially free of phosphorous" means from 0 to 1 ppm of total phosphorous. Typical bottle grade PET resins comprise greater than 40 ppm of phosphorous in the form of phosphoric or phosphonic acid, which are typically used as a stabilizer additive during the resin-forming process. Without intending to be bound any particular theory, it is believed that the phosphorous interferes with the cobalt (or other transition metal) and significantly hinders the efficiency of the cobalt (or other transition metal) to act as an oxidation catalyst and the result is an induction period of from one to three months before oxygen scavenging can be detected in a blow molded bottle. Polyester containers comprising a polyester base polymer of less than 40 ppm of phosphorous blended with an oxidizable organic component such as, for example, those described below, surprisingly exhibit excellent oxygen scavenging properties without an induction period as was expected in the art. Suitable "low phosphorous" PET resins are commercially available and include, for example, DAK Laser+ L44A and L44B, which are available from DAK Americas LLC, Chadds Ford, PA 19317, USA. One of ordinary skill in the art would indeed know how to manufacture polyester resins that are substantially free of phosphorous.

In preferred embodiments, the polyester base resin is also substantially free of titanium. It has also been discovered that titanium may also interfere with the oxidation catalyst.

### Oxidizable Polymeric Component

Compositions of the present invention also comprise an oxygen scavenging composition comprising at least one polyether polyol of the following Formula I.

[HO-(R₁O)ₙ-]ₘX (I)

Wherein R₁ is a substituted or unsubstituted bivalent alkylene group having 2 to 10 carbon atoms and X is H or a monovalent, bivalent, trivalent or tetravalent linking group having 1-10 carbon atoms, n = 2 to 100, and m = 1, 2, 3 or 4. Preferably, m = 2 or 3, and most preferably m = 2 (i.e., a polyether diol). Preferably, n = 4 to 50, and most preferably from 8 to 30. Examples of preferred polyether polyols include the commercial polyalkylene glycols namely, polyethylene glycols, polypropylene glycols, polybutylene glycols and polytetramethyeneether glycols of molecular weight ranging from 200 to 4000. Among these the polytetramethyene ether glycols (PTMEG) are preferred. The MW of the PTMEG is preferably from 250 to 4000, more preferably from 400 to 3000 and most preferably from 650 to 2000.

In the above formula the key structural unit -(R₁O)ₙ- represents an oxidizable polyether unit in the oligomeric polyether polyol.

The amount of the poly(alkylene glycol) may vary, so long as the desired scavenging effect is provided and final composition can be formed into the desired article. Amounts for scavenging include at least 0.3 weight % to 0.7 weight % poly(alkylene glycol).

For polyols, the number average molecular weight (Mn) can be determined by methods known to those skilled in the art. In one method, the equivalent weight is obtained first by end group measurement such as by an IR method or titration. Mn= Eq.wt x functionality (e.g., 2x eq.wt. for a difunctional oligomer or polymer). In another example, as for the case of polyether polyols, the hydroxyl end group content, which is commonly referred to as 'hydroxyl number (OH)', is measured by titrating a known mass of the polyol against potassium hydroxide (KOH).

### Transition Metal

The transition metal used in the instant compositions is a metal in the positive oxidation state. It should be noted that it is contemplated that one or more such metals may be used. The transition metal functions to catalyze or promote the oxidation of the organic oxidizable component(s) (i.e., the reaction of the organic oxidizable component with molecular oxygen).

The transition metal can be selected from the first, second, or third transition series of the Periodic Table. The metal can be Rh, Ru, or one of the elements in the series of Sc to Zn (i.e., Sc, Ti, V, Cr, Mn, Fe, Co, Ni, Cu, and Zn). In some embodiments, cobalt is added in +2 or +3 oxidation state. In some embodiments, it is preferred to use cobalt in the +2 oxidation state. In certain embodiments, copper in the +2 oxidation state is utilized. In some embodiments, rhodium in the +2 oxidation state is used. In certain embodiments, zinc may also be added to the composition. Preferred zinc compounds include those in a positive oxidation state.

Suitable counter-ions to the transition metal cations include carboxylates, such as neodecanoates, octanoates, acetates, lactates, naphthalates, malates, stearates, acetylacetonates, linoleates, oleates, palmitates, 2-ethylhexanoates, or ethylene glycolates; or as their oxides, borates, carbonates, chlorides, dioxides, hydroxides, nitrates, phosphates, sulfates, or silicates among others.

In some embodiments, levels of at least 10 ppm, or at least 50 ppm, or at least 100 ppm of metal can achieve suitable oxygen scavenging levels. The exact amount of transition metal used in an application can be determined by trials that are well within the skill level of one skilled in the art. In some embodiments involving wall applications (as opposed to master batch applications where more catalyst is used), it is preferred to keep the level of metal below 300 ppm and, in other embodiments, preferably below 250 ppm. In a wall for a package comprising at least one layer as defined in claim 1, it is particularly preferred that the at least one transition metal has a concentration of from 10 to 400 ppm. In master batch compositions, the level of transition metal may range from 1000 to 10,000 ppm. In some preferred embodiments, the range is from 2000 to 5000 ppm.

The transition metal or metals may be added neat or in a carrier (such as a liquid or wax) to an extruder or other device for making the article, or the metal may be present in a concentrate or carrier with the oligomeric oxidizable organic component, in a concentrate or carrier with a base polymer, or in a concentrate or carrier with a base polymer/oxidizable organic component blend. Alternatively, at least a portion of the transition metal may be added as a polymerization catalyst to the melt phase reaction for making the base polymer (a polyester polymer in some embodiments) and be present as residual metals when the polymer is fed to the melting zone (e.g. the extrusion or injection molding zone) for making the article such as a preform or sheet. It is desirable that the addition of the transition metal does not substantially increase the intrinsic viscosity (IV) of the melt in the melt processing zone. Thus, transition metal or metals may be added in two or more stages, such as once during the melt phase for the production of the polyester polymer and again once more to the melting zone for making the article.

### Chain Extending Agent

Compositions of the present invention also comprise at least one chain extending agent. The chain extending agent functions to control the IV of the PET by preventing PET chain degradation in the molten state (e.g., injection molding) in the presence of the polyether component such as, for example, PTMEG. The chain extending agent of the present invention can be, for example, a bisanhydride or a bisepoxide, which are capable of melt-phase chain extension of PET by reaction with the hydroxyl end groups of the PET.

In some embodiments, for example, the chain extending agent is a bisanhydride having the chemical structure of Formula II: 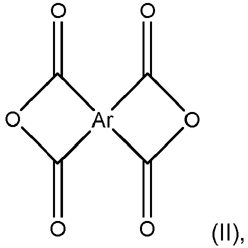 wherein Ar is 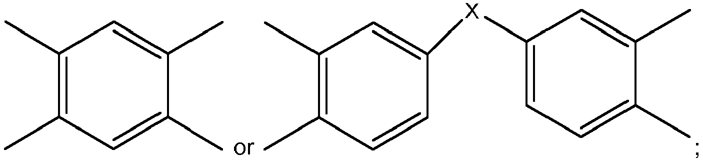 and X is -O-, -CO-, -CH₂-, -C(CH₃)₂-, or Z, wherein Z is represented by the structure, 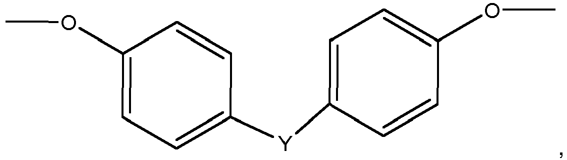 wherein Y is -O-, -CH₂-, -CO-, or -C(CH₃)₂-.

Examples of bis anhydrides suitable for use as chain extending agents in accord with the present invention include pyromellitic dianhydride (PMDA), benzophenonetetracarboxylic acid dianhydride, diphenyl sulfone tetracarboxylic dianhydride, bis(3,4-dicarboxyphenyl)ether dianhydride, bis(3,4-dicarboxyphenyl)thioether dianhydride, bisphenol-A bisether dianhydride, 2,2-bis(3,4-dicarboxyphenyl)hexafluoropropane dianhydride, 2,3,6,7-napthalenetetracarboxylic acid dianhydride, bis(3,4-dicarboxyphenyl)sulfone dianhydride, 1,2,5,6-napthalenetetracarboxylic acid dianhydride, 2,2',3,3'-biphenyltetracarboxylic acid, hydroquinone bisether dianhydride, 3,4,9,10-perylene tetracarboxylic acid dianhydride, 2,2-bis(3,4-dicarboxyphenyl)propane dianhydride, 3,3',4,4'-biphenyltetracarboxylic acid dianhydride, and 4,4'-oxydiphthalic dianhydride (ODPA).

Preferred bisanhydrides include pyromellitic dianhydride (PMDA), bisphenol-A bisether dianhydride, hydroquinone bisether dianhydride, and 4,4'-oxydiphthalic dianhydride (ODPA). Most preferably the bisanhydride is pyromellitic dianhydride (PMDA).

In other embodiments, for example, the chain extending agent is a bisepoxide having the chemical structure of Formula III: 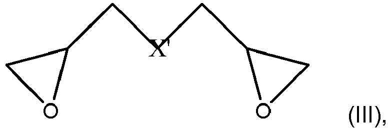 wherein X' is a bifunctional organic linking group such as -O-Ar'-O-, -N(Y')-, -N(Z')N-, where Ar' is an aromatic group, Y' is an amide, and Z' is an imide linking group.

Bisepoxide structures suitable for use as chain extending agents according to the present invention include bisphenol-A-diglycidylether, bis(3,4-epoxycyclohexylmethyl) adipate, N,N-diglycidyl benzamide (and related species) N,N-diglycidyl nailine and related structures, N,N diglycidylhydantoin, barbituric acid, isocyanuric acid or uracil species, N,N-diglycidyl di-imides, N,N-diglycidyl imidazolones, and epoxy novolaks.

Preferably, the chain extending agent employed has adequate high temperature stability so as not to degrade at polymer processing temperatures. For PET, this is typically between 260 °C and 300 °C.

Preferred amounts of the chain extending agent include from 0.05 weight % to 5.0 weight % and more preferably at least 0.075 weight % to 0.3 weight %, and most preferably at least 0.1 weight % to 0.2 weight % based on the weight of PET.

To achieve a blow molded PET container that meets performance criteria in toughness and durability, it is preferred that the resultant IV of the PET in a container produced with the composition of the present invention is from 0.70 dL/g to 0.85 dL/g, more preferably from 0.72 dL/g to 0.83 dL/g, and most preferably from 0.74 dL/g to 0.80 dL/g. As noted above, the PET resins suitable for bottle production typically have an IV range from 0.72 to 0.84 dL/g. Thus, the amount of chain extending agent can be varied according to process conditions to achieve a targeted IV of the final blow molded container of from 0.69 dL/g to 0.80 dL/g, and depending on the initial IV of the base polymer. Typically, the IV of a blow molded container is measured according to ASTM D1243.

The amounts of the components used in the oxygen scavenging compositions of the present invention can affect the use and effectiveness. Thus, the amounts of base polymer, transition metal catalyst, chain extender, and polyether polyol oxidizable component can vary depending on the desired article and its end use. For example, the primary function of the polyether polyol component detailed above is to react irreversibly with oxygen during the scavenging process, while a primary function of the transition metal catalyst is to facilitate this process. Thus, to a large extent, the amount of the polyether polyol component present affects the oxygen scavenging capacity of the composition, i.e., the amount of oxygen that the composition can consume, while the amount of transition metal catalyst affects the rate at which oxygen is consumed as well as the induction period.

The oxygen scavenger composition of the present invention can be incorporated in packaging articles having various forms. Suitable articles include, but are not limited to, flexible sheet films, flexible bags, pouches, semi-rigid and rigid containers such as bottles (e.g., PET bottles) or metal cans, or combinations thereof.

Typical flexible films and bags include those used to package various food items and may be made up of one or a multiplicity of layers to form the overall film or bag-like packaging material. The oxygen scavenger composition of the present invention can be used in one, some or all of the layers of such packaging material.

Typical rigid or semi-rigid articles include plastic, paper or cardboard containers, such as those utilized for juices, soft drinks, as well as thermoformed trays or cup normally having thickness in the range of from 100 to 1000 micrometers. The walls of such articles can comprise single or multiple layers of materials. The articles can also take the form of a bottle or metal can, or a crown, cap, crown or cap liner, plastisol or gasket. The oxygen scavenger composition of the present invention can be used as an integral layer or portion of, or as an external or internal coating or liner of, the formed semi-rigid or rigid packaging article. As a liner, the oxygen scavenger composition can be extruded as a film along with the rigid article itself, in, e.g., a coextrusion, extrusion coating, or extrusion lamination process, so as to form the liner *in situ* during article production; or alternatively can be adhered by heat and/or pressure, by adhesive, or by any other suitable method to an outer surface of the article after the article has been produced.

In one preferred embodiment of the present invention, the composition of the present invention, i.e., a base polymer, a transition metal in a positive oxygen state, a chain extending agent, at least one polyether polyol component as described above, and at least one activator compound as described above can be employed to form a monolayer bottle. In another preferred embodiment of the present invention, the composition of the present invention can form one layer of a multilayer bottle wherein the layer comprising the composition of the present invention may comprise from at least 1% and typically 2 to 6% of the container.

Besides articles applicable for packaging food and beverage, articles for packaging other oxygen-sensitive products can also benefit from the present invention. Such products would include pharmaceuticals, oxygen sensitive medical products, corrodible metals or products and electronic devices.

The composition may also include other components such as pigments, fillers, crystallization aids, impact modifiers, surface lubricants, denesting agents, stabilizers, ultraviolet light absorbing agents, metal deactivators, nucleating agents such as polyethylene and polypropylene, phosphite stabilizers and dyestuffs. Other additional components are well known to those skilled in the art and can be added to the existing composition so long as they do not negatively impact the performance of the compositions. Typically, the total quantity of such components will be less than 10% by weight relative to the whole composition. In some embodiments, the amount of these optional components is less than 5%, by weight relative to the total composition.

A common additive used in the manufacture of polyester polymer compositions used to make stretch blow molded bottles is a reheat additive because the preforms made from the composition must be reheated prior to entering the mold for stretch blowing into a bottle. Any of the conventional reheat additives can be used, such additives include various forms of black particles, e.g. carbon black, activated carbon, black iron oxide, glassy carbon, and silicon carbide; the gray particles such as antimony, and other reheat additives such as silicas, red iron oxide, and so forth.

In many applications, not only are the packaging contents sensitive to the ingress of oxygen, but the contents may also be affected by UV light. Fruit juices and pharmaceuticals are two examples of such contents. Accordingly, in some embodiments, it is desirable to incorporate into the polyester composition any one of the known UV absorbing compounds in amounts effective to protect the packaged contents.

The instant compositions can be made by mixing a base polymer (PET, for example) with the chain extending agent, and polyether polyol component and the transition metal. Such compositions can be made by any method known to those skilled in the art. In certain embodiments, some or part of the transition metal may exist in the base polymer prior to mixing. This residual metal, for example, can exist from the manufacturing process of the base polymer. In some embodiments, the base polymer, the chain extending agent, the polyether polyol component, and the transition metal are mixed by tumbling in a hopper. Other optional ingredients can be added during this mixing process or added to the mixture after the aforementioned mixing or to an individual component prior to the aforementioned mixing step.

The instant composition can also be made by adding each ingredient separately and mixing the ingredients prior to melt processing the composition to form an article. In some embodiments, the mixing can be just prior to the melt process zone. In other embodiments, one or more ingredients can be premixed in a separate step prior to bringing all of the ingredients together.

In some embodiments, the invention concerns use of the compositions described herein as a component of a wall that is used in a package for oxygen sensitive materials. The necessary scavenging capacity of a package will generally have to be greater for walls that have a greater permeance in the absence of scavenging additives. Accordingly, a good effect is harder to achieve with inherently higher permeance materials are used.

The wall may be a rigid one, a flexible sheet, or a clinging film. It may be homogenous or a laminate or coated with other polymers. If it is laminated or coated, then the scavenging property may reside in a layer of the wall the permeance of which is relatively high in the absence of scavenging and which alone would not perform very satisfactorily but which performs satisfactorily in combination with one or more other layers which have a relatively low permeance but negligible or insufficient oxygen-scavenging properties. A single such layer could be used on the outside of the package since this is the side from which oxygen primarily comes when the package is filled and sealed. However, such a layer to either side of the scavenging layer would reduce consumption of scavenging capacity prior to filling and sealing.

When the instant compositions are used in a wall or as a layer of a wall, the permeability of the composition for oxygen is advantageously not more than 3.0, or 1.7, or 0.7, or 0.2, or 0.03 cm³. mm/(m². atm.day). The permeability of the composition provided by the present invention is advantageously not more than three-quarters of that in the absence of oxygen-scavenging properties. In some embodiments, the permeability is not more than one half, one-tenth in certain embodiments, one twenty-fifth in other embodiments, and not more than one-hundredth in yet other embodiments of that in the absence of oxygen-scavenging properties. The permeability in the absence of oxygen-scavenging properties is advantageously not more than 17 cm³ mm/(m² atm day), or 10, and or 6. A particularly good effect can be achieved for such permeabilities in the range from 0.5, or 1.0, to 10, or 6.0, cm³ mm/(m² atm day). Measuring oxygen permeation can be performed by one of ordinary skilled in the art employing oxygen permeation (OTR) instrumentation such as, for example, OX-TRAN® instruments available from MOCON, Inc. (Minneapolis, MN).

In another aspect, the instant composition can be used as a master batch for blending with a polymer or a polymer containing component. In such compositions, the concentration of the polyether polyol component and the transition metal will be higher to allow for the final blended product to have suitable amounts of these components. The master batch may also contain an amount of the polymer to which the master batch is to be blended with. In other embodiments, the master batch may contain a polymer that is compatible with the polymer to which the master batch is to be blended.

In yet another aspect, the compositions of the instant invention can be used for forming a layer of a wall which primarily provides oxygen-scavenging (another layer including polymer providing gas barrier without significant scavenging), or as a head-space scavenger (completely enclosed, together with the package contents, by a package wall). Such techniques are well know to those skilled in the art.

The time period for which the permeability is maintained can be extended by storing the articles in sealed containers or under an inert atmosphere such as nitrogen prior to use with oxygen sensitive materials.

In another aspect, the invention provides a package, whether rigid, semi-rigid, collapsible, lidded, or flexible or a combination of these, comprising a wall as formed from the compositions described herein. Such packages can be formed by methods well known to those skilled in the art.

Among the techniques that may be used to make articles are moulding generally, injection moulding, stretch blow moulding, extrusion, thermoforming, extrusion blow moulding, and (specifically for multilayer structures) co-extrusion and lamination using adhesive tie layers. Orientation, e.g., by stretch blow moulding, of the polymer is especially attractive with phthalate polyesters because of the known mechanical advantages that result.

The melt processing zone for making the article can be operated under customary conditions effective for making the intended articles, such as preforms, bottles, trays, and other articles mentioned below. In some preferred embodiments, suitable operating conditions effective to establish a physical blend of the polyester polymer, polyether polyol, chain extending agent, and transition metal are temperatures in the melt processing zone within a range of 250°C to 300°C at a total cycle time of less than 6 minutes, and typically without the application of vacuum and under a positive pressure ranging from 0 to 62.1 bar (900 psig). In some embodiments, the residence time of the melt on the screw can range from 1 to 4 minutes.

Specific articles include preforms, containers and films for packaging of food, beverages, cosmetics, pharmaceuticals, and personal care products where a high oxygen barrier is needed. Examples of beverage containers are bottles for holding water and carbonated soft drinks, and the invention is particularly useful in bottle applications containing juices, sport drinks, beer or any other beverage where oxygen detrimentally affects the flavor, fragrance, performance (prevent vitamin degradation), or color of the drink. The compositions of the instant invention are also particularly useful as a sheet for thermoforming into rigid packages and films for flexible structures. Rigid packages include food trays and lids. Examples of food tray applications include dual ovenable food trays, or cold storage food trays, both in the base container and in the lidding (whether a thermoformed lid or a film), where the freshness of the food contents can decay with the ingress of oxygen. The compositions of the instant invention also find use in the manufacture of cosmetic containers and containers for pharmaceuticals or medical devices.

The package walls of the instant invention can be a single layer or a multilayer constructions. In some embodiments using multilayer walls, the outer and inner layers may be structural layers with one or more protective layers containing the oxygen scavenging material positioned there between. In some embodiments, the outer and inner layers comprise and polyolefin or a polyester. In certain embodiments, a single layer design is preferred. Such a layer may have advantages in simplicity of manufacture and cost.

In this specification and in the claims that follow, reference will be made to a number of terms, which shall be defined to have the following meanings:

As used herein, the phrase "having the formula" or "having the structure" is not intended to be limiting and is used in the same way that the term "comprising" is commonly used. The term "independently selected from" is used herein to indicate that the recited elements, e.g., R groups or the like, can be identical or different.

As used herein, the terms "a", "an", "the" and the like refer to both the singular and plural unless the context clearly indicates otherwise. "A bottle", for example, refers to a single bottle or more than one bottle.

Also as used herein, the description of one or more method steps does not preclude the presence of additional method steps before or after the combined recited steps. Additional steps may also be intervening steps to those described. In addition, it is understood that the lettering of process steps or ingredients is a convenient means for identifying discrete activities or ingredients and the recited lettering can be arranged in any sequence.

Where a range of numbers is presented in the application, it is understood that the range includes all integers and fractions thereof between the stated range limits. A range of numbers expressly includes numbers less than the stated endpoints and those in-between the stated range. A range of from 1-3, for example, includes the integers one, two, and three as well as any fractions that reside between these integers.

As used herein, "master batch" refers to a mixture of base polymer, oxidizable organic component, and transition metal that will be diluted, typically with at least additional base polymer, prior to forming an article. As such, the concentrations of the polyether polyol component and transition metal are higher than in the formed article.

The following examples are included to demonstrate preferred embodiments of the invention regarding synthesis of the molecules and use of the molecules to scavenge oxygen as well products containing such scavengers. It should be appreciated by those of skill in the art that the techniques disclosed in the examples which follow represent techniques discovered by the inventors to function well in the practice of the invention, and thus can be considered to constitute preferred modes for its practice.

### EXAMPLES

The following examples demonstrate embodiments of the invention regarding PET polymer blends with an oligomeric, oxidizable polyether polyol and a cobalt carboxylate catalyst to make oxygen scavenging PET containers.

### General process used for making the PET containers

The oxygen scavenging PET containers (e.g., bottles) of this invention as well as the corresponding PET containers of the control and comparative examples were made by melt blending the components and injection molding preforms from the compositions, followed by a reheat stretch blow molding the preforms in a 2^{nd} step into the shaped containers.

In general, to make monolayer PET containers, monolayer preforms were made on a single cavity, 2003 Battenfeld A800/200H/ 125HC injection molding machine. A preblended mixture of a bottle grade PET base resin (0.72 to 0.84 IV, dried to a low moisture content of <10 ppm), 0.5 wt. % to 0.7 wt. % of the oxidizable polyether diol, 0.02 wt. % to 0.05 wt. % cobalt neodecanoate catalyst, and up to 2 wt. % (preferably 0.05 wt. % to 1.5 wt. %, more preferably 0.075 wt. % to 1 wt. %, and most preferably 0.1 wt. % to 0.5 wt. %) of a chain extending additive comprising a chain extending agent of Formula II or Formula III was fed into the throat of the injection molding extruder heated to 260-270 °C. The molten blend was then injection molded into a single cavity preform mold, such as a 30g 33mm finish 20 oz. ketchup bottle perform, to form the monolayer bottle preform. The cycle time for molding was about 30 sec.

In a 2^{nd} step, the above monolayer PET blend preforms were reheat-stretch-blow molded into monolayer bottles. The bottles were stretch blown on a Sidel SBO-1 machine set to run at a rate of about 800 bottles per hour. In this process, the ketchup bottle preforms were typically heated to a surface temperature of 99 °C prior to the blowing operation. The blow mold temperature was about 12 °C. The blow pressures were about 33 bar. Clear monolayer PET blend bottles were thus obtained.

As an alternative method, the oxygen scavenging PET compositions of this invention may also be used in making multilayer containers.

### Bottle Oxygen Scavenging Testing (Oxysense Method)

The oxygen scavenging properties of the PET bottles from all of the following inventive, comparative and control examples were evaluated using an Oxysense 4000B instrument with OxyDot oxygen sensors (available from OxySense Inc., Dallas, TX 752543, USA), for the measurement of oxygen ingress/ oxygen content with time. The OxyDots were attached to the inside middle portion of each test bottle. Each bottle was then loaded on an orbisphere bench top filler and after an initial flushing with nitrogen, it was filled with deoxygenated water (O₂ content <100 ppb) and capped. After several bottles of each composition were filled and sealed, they were stored under ambient conditions for a required shelf-life test period while the oxygen content or ingress in the bottles is measured. To make the measurements, the fiber optic pen of the instrument was aligned with the OxyDot (from the outside of the bottle), making sure that the tip of the pen was making contact with the bottle. Then the capture button was pressed to obtain the oxygen concentration in the bottle. The oxygen concentration was measured periodically with time.

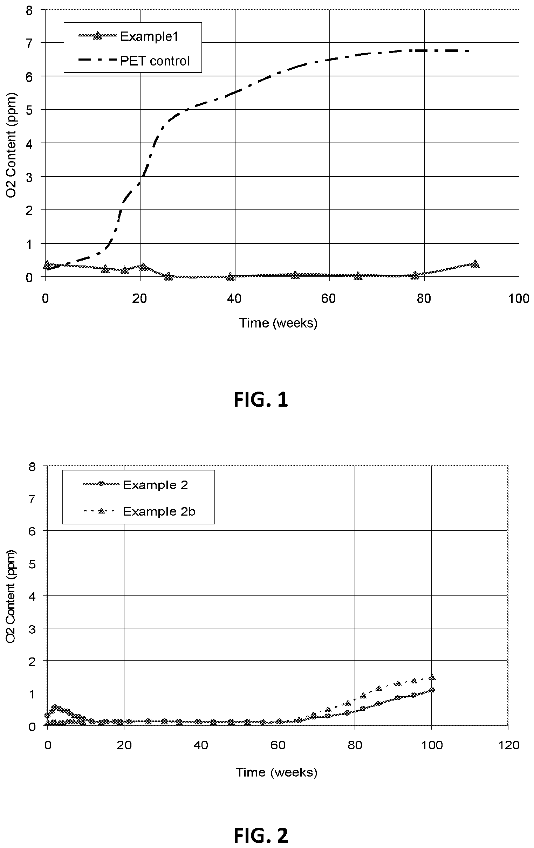

**Example 1 (Reference):** This example illustrates the preparation of oxygen scavenging bottles made from a blend of PET with 0.7 wt. % of a polytetramethyleneether glycol (PTMEG). A blend of PET resin (DAK L40A, 0.75 IV) with 0.7 wt. % PTMEG of 2000 MW (Polymeg® 2000 polyol, Lyondellbasell) and 0.035 wt. % of cobalt neodecanoate (CoNeo) was injection stretch blow molded into monolayer 20 oz. ketchup bottles (530 ml volume; average thickness = 0.05 cm), using the process described earlier. The bottles were tested for their oxygen scavenging performance after filling with the deoxygenated water and sealing followed by a periodic measurement of the oxygen ingress/ oxygen content in the bottles using the OxySense method described above. The oxygen ingress data is shown in FIG 1. The bottles exhibited excellent oxygen scavenging with essentially zero oxygen ingress in over 90 weeks of testing, while a control PET bottle showed more than 6 ppm of oxygen ingress over this period. The IV measurement of a small sample cut from the bottle showed an IV of 0.67, compared to an IV of 0.73 for the PET control.

**Example 2 (Reference):** This example illustrates the oxygen scavenging performance of PET bottles containing an even lower level (0.5 wt. %) of PTMEG. A mixture of PET resin (DAK L40A, 0.75 IV) with 0.5 wt. % PTMEG of 2900 MW (Terathane® 2900 polyether glycol from Invista) and 0.035 wt. % of CoNeo, was injection stretch blow molded into monolayer 20 oz. ketchup bottles (530 ml volume; average thickness = 0.05 cm), using the process described above. A similar composition as above, except with 0.05 wt. % CoNeo was also molded into bottles designated as Ex. 2b. Both bottles were tested for their oxygen scavenging performance as described above. The oxygen ingress data is shown in FIG 2. Excellent oxygen scavenging performance was achieved with near zero oxygen ingress after 30 weeks of testing, with oxygen levels remaining below 2 ppm after 100 weeks. The IV measurement of samples cut from both the bottles showed the same IV value of 0.69.

**Example 3 (Reference):** This example is similar to Example 2, except that 0.5 wt. % of PTMEG of 2000 MW (Polymeg® 2000, LyondeIIBaseII) was used along with 0.05 wt. % CoNeo in the PET blend. A sample from the resulting bottle had an IV of 0.64.

**Example 3b (Reference):** This example is similar to Example 3 with 0.5 wt. % PTMEG 2000 and 0.05 wt. % CoNeo, except that the base PET resin was a titanium catalyst-based PET of 0.84 IV (Ti818 from DAK). A sample from the resulting bottle had an IV of 0.69.

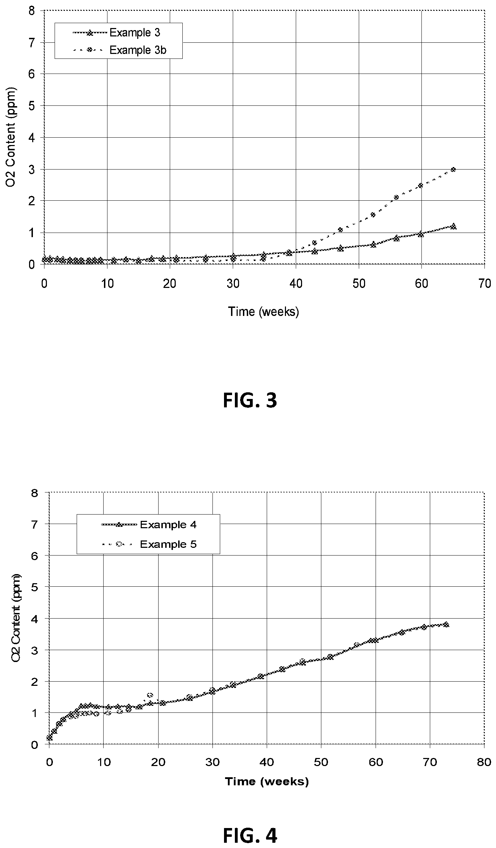

The bottles from both Examples 3 and 3b showed excellent oxygen scavenging rate as shown in FIG.3.

**Example 4 (Reference):** This example is similar to Example 3 , except 0.5 wt. % of PTMEG of 650 MW (Terathane® 650, Invista) was used along with 0.035 wt. % CoNeo in the blend. Sample from the resulting bottle had an IV of 0.61. The bottles exhibited good clarity.

**Example 5 (Reference):** This example is similar to Example 4, except 0.4 wt. % of PTMEG of 650 (Terathane® 650) was used along with 0.035 wt. % CoNeo in the blend. A sample from the resulting bottle had an IV of 0.63.

The bottles from both Examples 4 and 5 exhibited a good oxygen scavenging performance as shown in FIG.4.

### Examples 6-11:

Examples 6-11 and Control Examples 1-6 include various combinations of polyester base polymers, polyether polyols, chain extending agents, and transition metals, as summarized below in Table 1. The base polymer for each of Examples 6-11 and Control Examples 1-6 was Ti818 from DAK. Control Examples 1-2 include no polyether polyol, Control Examples 3-4 and Examples 6-8 include 0.5 wt. % of PTMEG of 650 molecular weight (Terathane 650 from Invista), and Control Examples 5-6 and Examples 9-11 include 0.5 wt. % of PTMEG of 2000 molecular weight (Terathane 2000 from Invista). Control Examples 1-6 include no chain extending agent, Examples 6 and 9 include 0.1 wt. % of benzophenone tetracarboxylic dianhydride (BTDA) from Sigma Aldrich, Examples 7 and 10 include pyromelliticdianhydride (PMDA) from Sigma Aldrich, and Examples 8 and 11 include Reprize from ColorMatrix, an undisclosed composition of a chain extender in a liquid carrier. Control Examples 1, 3, and 5 include no transition metal component, and Control Examples 2 and 4 and Examples 6-11 include 16 ppm of a cobalt catalyst (e.g., a cobalt salt master batch in PET such as Oxyclear Master Batch 2700, from Auriga Polymers Inc.). Each of Examples 6-11 and Control Examples 1-6 were molded by a similar process as in Examples 1-5 described above.

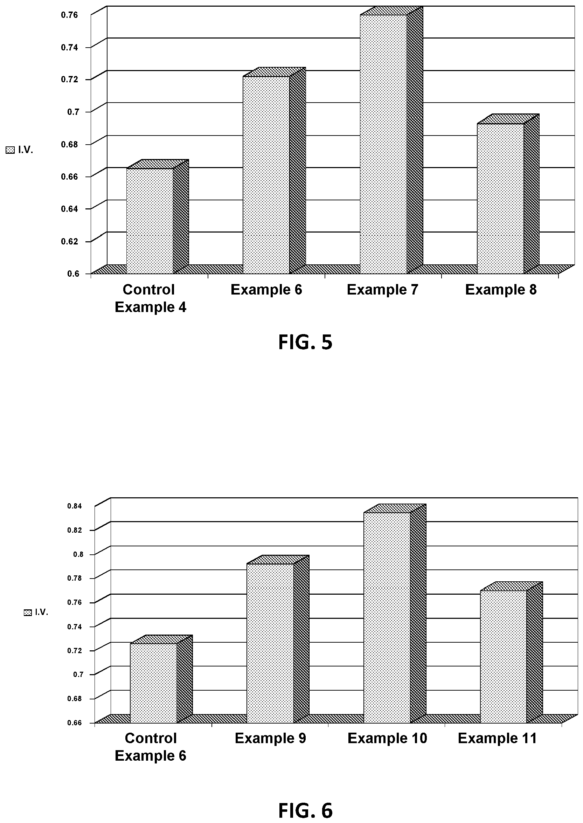

The intrinsic viscosity of each of Examples 6-11 and Control Examples 1-6 are also listed in Table 1 below. It can be seen from Table 1, as well as FIGS. 5 and 6, that the addition of the chain extending agent beneficially increases the intrinsic viscosity of the bottle preforms.

**Table 1**

| **Example** | **Polyester Base Polymer** | **Polyether Polyol** | **Chain Extending Agent** | **Transition Metal** | **Intrinsic Viscosity** |
|---|---|---|---|---|---|
| Control 1 | DAK Ti818 | None | None | None | 0.766 |
| Control 2 | DAK Ti818 | None | None | 16 ppm Co | 0.760 |
| Control 3 | DAK Ti818 | PTMEG 650 (0.5 wt. %) | None | None | 0.669 |
| Control 4 | DAK Ti818 | PTMEG 650 (0.5 wt. %) | None | 16 ppm Co | 0.665 |
| 6 | DAK Ti818 | PTMEG 650 (0.5 wt. %) | BTDA (0.1 wt. %) | 16 ppm Co | 0.722 |
| 7 | DAK Ti818 | PTMEG 650 (0.5 wt. %) | PMDA (0.1 wt. %) | 16 ppm Co | 0.760 |
| 8 | DAK Ti818 | PTMEG 650 (0.5 wt. %) | Reprize (0.25 wt. %) | 16 ppm Co | 0.693 |
| Control 5 | DAK Ti818 | PTMEG 2000 (0.5 wt. %) | None | None | 0.725 |
| Control 6 | DAK Ti818 | PTMEG 2000 (0.5 wt. %) | None | 16 ppm Co | 0.726 |
| 9 | DAK Ti818 | PTMEG 2000 (0.5 wt. %) | BTDA (0.1 wt. %) | 16 ppm Co | 0.792 |
| 10 | DAK Ti818 | PTMEG 2000 (0.5 wt. %) | PMDA (0.1 wt. %) | 16 ppm Co | 0.835 |
| 11 | DAK Ti818 | PTMEG 2000 (0.5 wt. %) | Reprize (0.25 wt. %) | 16 ppm Co | 0.770 |

## Claims

1. A wall for a package comprising at least one layer, the layer comprising a composition, the composition comprising:
a) a polyester base polymer;
b) at least one polyether polyol having a concentration of from 0.3 to 0.7 wt. %;
c) at least one chain extending agent; and
d) at least one transition metal in a positive oxidation state.

2. The wall of claim 1, wherein the polyester base polymer is polyethylene terephthalate.

3. The wall of claim 1 or 2, wherein the polyether polyol has the formula
[HO-(R₁O)ₙ-]ₘX
wherein R₁ is a substituted or unsubstituted bivalent alkylene group having 2 to 10 carbon atoms; X is H or a monovalent, bivalent, trivalent or tetravalent linking group having 1-10 carbon atoms; n = 2 to 100; and m = 1, 2, 3 or 4.

4. The wall of any one of claims 1 to 3, wherein the polyether polyol is a polytetramethyene ether glycol.

5. The wall of claim 4, wherein the polytetramethyene ether glycol has a molecular weight of 250 to 4000.

6. The wall of any one of claims 1 to 5, wherein the at least one transition metal is cobalt.

7. The wall of any one of claims 1 to 6, further comprising at least one counter ion to the at least one transition metal.

8. The wall of any one of claims 1 to 7, wherein the at least one transition metal has a concentration of from 10 to 400 ppm

9. The wall of any one of claims 1 to 8, wherein the at least one chain extending agent includes a bisanhydride or a bisepoxide.

10. The wall of claim 9, wherein the at least one chain extending agent includes a bisanhydride having the formula 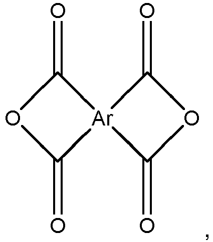 wherein Ar is 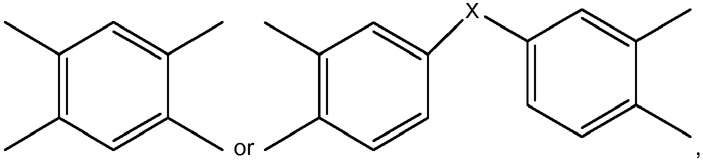 X is -O-, -CO-, -CH₂-, -C(CH₃)₂-, or Z, wherein Z is 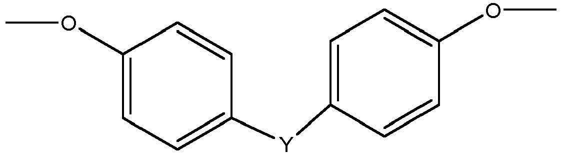 and Y is -O-, -CH₂-, -CO-, or -C(CH₃)₂-.

11. The wall of claim 10, wherein the bisanhydride is selected from the group consisting of pyromellitic dianhydride , benzophenonetetracarboxylic acid dianhydride, diphenyl sulfone tetracarboxylic dianhydride, bis(3,4-dicarboxyphenyl)ether dianhydride, bis(3,4-dicarboxyphenyl)thioether dianhydride, bisphenol-A bisether dianhydride, 2,2-bis(3,4-dicarboxyphenyl)hexafluoropropane dianhydride, 2,3,6,7-napthalenetetracarboxylic acid dianhydride, bis(3,4-dicarboxyphenyl)sulfone dianhydride, 1,2,5,6-napthalenetetracarboxylic acid dianhydride, 2,2',3,3'-biphenyltetracarboxylic acid, hydroquinone bisether dianhydride, 3,4,9,10-perylene tetracarboxylic acid dianhydride, 2,2-bis(3,4-dicarboxyphenyl)propane dianhydride, 3,3',4,4'-biphenyltetracarboxylic acid dianhydride, and 4,4'-oxydiphthalic dianhydride.

12. The wall of claim 9, wherein the at least one chain extending agent includes a bisepoxide having the formula 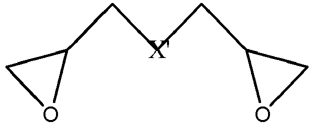 wherein X' is a bifunctional organic linking group selected from the group consisting of -OAr'-O-, -N(Y')- , -N(Z')N-, Ar' is an aromatic group, Y' is an amide, and Z' is an imide linking group.

13. The wall of claim 12, wherein the bisepoxide is selected from the group consisting of bisphenol-A-diglycidylether, bis(3,4-epoxycyclohexylmethyl) adipate, N,N-diglycidyl benzamide (and related species) N,N-diglycidyl nailine and related structures, N,N diglycidylhydantoin, barbituric acid, isocyanuric acid or uracil species, N,N-diglycidyl di-imides, N,N-diglycidyl imidazolones, and epoxy novolaks.

14. The wall of any one of claims 1 to 13, wherein the package is a monolayer container.

15. The wall of any one of claims 1 to 13, wherein the package is a multilayer container.

## Patentansprüche

1. Wand für eine Verpackung, umfassend mindestens eine Schicht, wobei die Schicht eine Zusammensetzung umfasst, und die Zusammensetzung umfasst:
a) ein Polymer auf Polyesterbasis;
b) mindestens ein Polyetherpolyol mit einer Konzentration von 0,3 bis 0,7 Gew%;
c) mindestens ein Kettenverlängerungsmittel; und
d) mindestens ein Übergangsmetall in einem positiven Oxidationszustand.

2. Wand nach Anspruch 1, wobei das Polymer auf Polyesterbasis Polyethylenterephthalat ist.

3. Wand nach Anspruch 1 oder 2, wobei das Polyetherpolyol die folgende Formel aufweist:
[HO-(R₁O)ₙ-]ₘX
wobei R₁ eine substituierte oder unsubstituierte zweiwertige Alkylengruppe mit 2 bis 10 Kohlenstoffen ist; X H oder eine einwertige, zweiwertige, dreiwertige oder vierwertige Bindungsgruppe mit 1 bis 10 Kohlenstoffen ist; n = 2 bis 100 ist; und m = 1, 2, 3 oder 4 ist.

4. Wand nach einem der Ansprüche 1 bis 3, wobei das Polyetherpolyol ein Polytetramethylenetherglycol ist.

5. Wand nach Anspruch 4, wobei das Polytetramethylenetherglycol eine relative Molekülmasse von 250 bis 4000 aufweist.

6. Wand nach einem der Ansprüche 1 bis 5, wobei das mindestens eine Übergangsmetall Cobalt ist.

7. Verfahren nach einem der Ansprüche 1 bis 6, umfassend mindestens ein Gegenion zu dem mindestens einen Übergangsmetall.

8. Wand nach einem der Ansprüche 1 bis 7, wobei das mindestens eine Übergangsmetall eine Konzentration von 10 bis 400 ppm aufweist.

9. Wand nach einem der Ansprüche 1 bis 8, wobei das mindestens eine Kettenverlängerungsmittel ein Bisanhydrid oder ein Bisepoxid umfasst.

10. Wand nach Anspruch 9, wobei das mindestens eine Kettenverlängerungsmittel ein Bisanhydrid umfasst, das die folgende Formel aufweist: 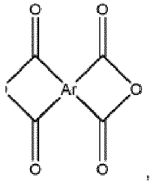 wobei Ar 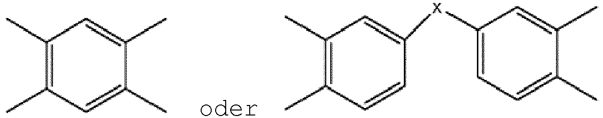 ist, X -O-, -CO-, -CH₂-, --C(CH₃)₂- oder Z ist; wobei Z 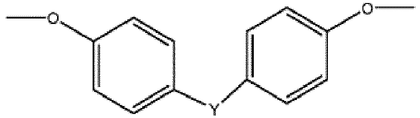 ist, und Y -O-, -CO-, -CH₂- oder -C(CH₃)₂- ist.

11. Wand nach Anspruch 10, wobei das Bisanhydrid aus der Gruppe bestehend aus Pyromellitsäuredianhydrid, Benzophenontetracarbonsäuredianhydrid, Diphenylsulfontetracarbonsäuredianhydrid, Bis(3,4-dicarboxyphenyl)etherdianhydrid, Bis(3,4-dicarboxyphenyl)thioetherdianhydrid, Bisphenol-A-bisetherdianhydrid, 2,2-Bis(3,4-dicarboxyphenyl)hexafluorpropansäuredianhydrid, 2,3,6,7-Napthalentetracarbonsäuredianhydrid, Bis(3,4-dicarboxyphenyl)sulfonsäuredianhydrid, 1,2,5,6-Napthalentetracarbonsäuredianhydrid, 2,2',3,3'-Biphenyltetracarbonsäure, Hydrochinonbisetherdianhydrid, 3,4,9,10-Perylentetracarbonsäuredianhydrid, 2,2-Bis(3,4-dicarboxyphenyl)propansäuredianhydrid, 3,3',4,4'-Biphenyltetracarbonsäuredianhydrid, und 4,4'-Oxydiphthalsäuredianhydrid ausgewählt ist.

12. Wand nach Anspruch 9, wobei das mindestens eine Kettenverlängerungsmittel ein Bisepoxid umfasst, das die folgende Formel aufweist: 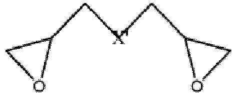 wobei X' eine bifunktionelle organische Bindungsgruppe ist, die aus der Gruppe bestehend aus -O-Ar'-O-, - N(Y')-, -N(Z')N- ausgewählt ist, Ar' eine aromatische Gruppe ist, Y' ein Amid ist, und Z' eine Imidbindungsgruppe ist.

13. Wand nach Anspruch 12, wobei das Bisepoxid aus der Gruppe bestehend aus Bisphenol-A-diglycidylether, Bis(3,4-epoxycyclohexylmethyl)adipat, N,N-Diglycidylbenzamid (und verwandten Spezies) N,N-Diglycidylnailin und verwandten Strukturen, N,N-Diglycidylhydantoin, Barbitursäure, Isocyanursäure oder Uracilspezies, N,N-Diglycidyldiimiden, N,N-Diglycidylimidazolonen und Epoxidnovolaken ausgewählt ist.

14. Wand nach einem der Ansprüche 1 bis 13, wobei die Verpackung ein einschichtiger Behälter ist.

15. Wand nach einem der Ansprüche 1 bis 13, wobei die Verpackung ein mehrschichtiger Behälter ist.

## Revendications

1. Paroi pour un emballage comprenant au moins une couche, la couche comprenant une composition, la composition comprenant :
a) un polymère de base en polyester ;
b) au moins un polyéther-polyol ayant une concentration de 0,3 à 0,7 % en poids ;
c) au moins un agent d'allongement de chaîne ; et
d) au moins un métal de transition dans un état d'oxydation positif.

2. Paroi selon la revendication 1, dans lequel le polymère de base en polyester est le poly(téréphtalate d'éthylène).

3. Paroi selon la revendication 1 ou 2, dans laquelle le polyéther-polyol répond à la formule
[HO-(R₁O)ₙ-]ₘX
dans laquelle R₁ est un groupe alkylène divalent substitué ou non substitué ayant 2 à 10 atomes de carbone ; X est H ou un groupe de liaison monovalent, divalent, trivalent ou tétravalent ayant 1 à 10 atomes de carbone ; n = 2 à 100 ; et m = 1, 2, 3 ou 4.

4. Paroi selon l'une quelconque des revendications 1 à 3, dans laquelle le polyéther-polyol est un polytétraméthylène-éther-glycol.

5. Paroi selon la revendication 4, dans laquelle le polytétraméthylène-éther-glycol a une masse moléculaire de 250 à 4000.

6. Paroi selon l'une quelconque des revendications 1 à 5, dans laquelle l'au moins un métal de transition est le cobalt.

7. Paroi selon l'une quelconque des revendications 1 à 6, comprenant en outre au moins un contre-ion de l'au moins un métal de transition.

8. Paroi selon l'une quelconque des revendications 1 à 7, dans laquelle l'au moins un métal de transition a une concentration de 10 à 400 ppm.

9. Paroi selon l'une quelconque des revendications 1 à 8, dans laquelle l'au moins un agent d'allongement de chaîne contient un bisanhydride ou un bisépoxyde.

10. Paroi selon la revendication 9, dans laquelle l'au moins un agent d'allongement de chaîne contient un bisanhydride de formule 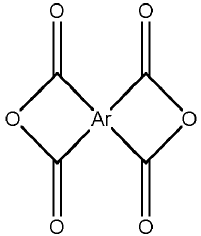 dans laquelle Ar est 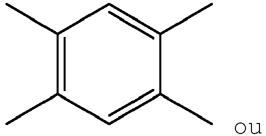 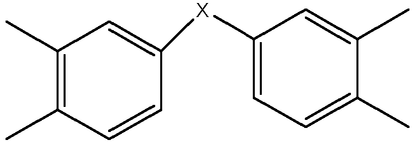 X est -O-, -CO-, -CH₂-, -C(CH₃)₂-, ou Z, où Z est 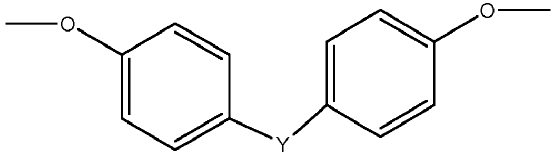 et Y est -O-, -CH₂-, -CO-, ou -C(CH₃)₂-.

11. Paroi selon la revendication 10, dans laquelle le bisanhydride est choisi dans l'ensemble constitué par le dianhydride pyromellitique, le dianhydride d'acide benzophénonetétracarboxylique, le dianhydride tétracarboxylique de diphénylsulfone, le dianhydride de bis(3,4-dicarboxyphényl)éther, le dianhydride de bis(3,4-dicarboxyphényl)thioéther, le dianhydride de bis-éther de bisphénol A, le dianhydride de 2,2-bis(3,4-dicarboxyphényl)hexafluoropropane, le dianhydride d'acide 2,3,6,7-naphtalènetétracarboxylique, le dianhydride de bis(3,4-dicarboxyphényl)sulfone, le dianhydride d'acide 1,2,5,6-naphtalènetétracarboxylique, l'acide 2,2',3,3'-biphényltétracarboxylique, le dianhydride de bis-éther d'hydroquinone, le dianhydride d'acide 3,4,9,10-pérylènetétracarboxylique, le dianhydride de 2,2-bis(3,4-dicarboxyphényl)propane, le dianhydride d'acide 3,3',4,4'-biphényltétracarboxylique, et le dianhydride 4,4'-oxydiphtalique.

12. Paroi selon la revendication 9, dans laquelle l'au moins un agent d'allongement de chaîne contient un bisépoxyde de formule 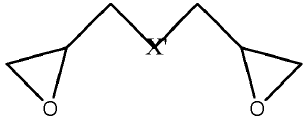 dans laquelle X' est un groupe de liaison organique bifonctionnel choisi dans l'ensemble constitué par -O-Ar'-O-, -N(Y')-, -N(Z')N-, Ar' est un groupe aromatique, Y' est un amide, et Z' est un groupe de liaison imide.

13. Paroi selon la revendication 12, dans laquelle le bisépoxyde est choisi dans l'ensemble constitué par l'éther diglycidylique de bisphénol A, l'adipate de bis(3,4-époxycyclohexylméthyle), le N,N-diglycidylbenzamide (et les espèces apparentées), la N,N-diglycidylaniline et les structures apparentées, la N,N-diglycidylhydantoine, l'acide barbiturique, l'acide isocyanurique ou les espèces uraciles, les N,N-diglycidyldiimides, les N,N-diglycidylimidazolones, et les novolaques époxy.

14. Paroi selon l'une quelconque des revendications 1 à 13, dans laquelle l'emballage est un récipient monocouche.

15. Paroi selon l'une quelconque des revendications 1 à 13, dans laquelle l'emballage est un récipient multicouche.
